# EUROPÄISCHE PATENTSCHRIFT

(11) **EP 3 062 996 B1**
(45) Veröffentlichungstag und Bekanntmachung des Hinweises auf die Patenterteilung: **22.01.2025**
(21) Anmeldenummer: 14786658.6
(22) Anmeldetag: 17.10.2014
(51) Int. Cl.: B29C 70/88, C08K 3/04, H01B 1/24, H05B 3/36

(54) **HEIZMITTEL UND ELEKTRISCH LEITENDER HEIZKÖRPER**
HEATING MEANS AND AN ELECTRICALLY-CONDUCTIVE HEATING ELEMENT
MOYEN DE CHAUFFAGE ET ÉLÉMENT CHAUFFANT ÉLECTRIQUEMENT CONDUCTEUR

(30) Priorität: 29.10.2013 DE 102013221968
(43) Veröffentlichungstag der Anmeldung: 07.09.2016
(73) Patentinhaber: Vitrulan Holding GmbH, 95509 Marktschorgast (DE)
(72) Erfinder: FREUND, Matthias, 90429 Nürnberg (DE); KRAVCHENKO, Iryna, 37085 Göttingen (DE)
(74) Vertreter: Lindner Blaumeier Patent- und Rechtsanwälte
(86) Internationale Anmeldenummer: PCT/EP2014/072326
(87) Internationale Veröffentlichungsnummer: WO 2015/062879

(56) Entgegenhaltungen:
- WO-A1-03/103955
- WO-A1-2008/105121
- WO-A1-95/20005
- DE-A1- 102011 007 834
- DE-A1- 2 326 936
- KR-A- 20000 053 890
- DATABASE WPI Week 200914, Derwent World Patents Index; AN 2009-B30953, XP002732710

## Beschreibung

Die Erfindung betrifft ein Heizmittel in Form einer elektrisch leitfähigen Beschichtung und einen damit hergestellten elektrisch leitenden Heizkörper. Daneben betrifft die Erfindung auch eine Verwendung des Heizmittels.

Bei Heizkörpern mit funktioneller Beschichtung enthält diese elektrisch leitfähige Komponenten, die bei Stromfluss aufgrund des ohmschen Widerstandes elektrische Energie in Wärme umwandeln.

Aus der WO 2012/143221 ist eine Zusammensetzung bekannt, die anorganisches Bindemittel, Ruß und Kohlenstofffasern von 50 - 8000 µm Länge sowie gegebenenfalls auch Graphit enthält.

Die US 2009/0328411 beschreibt ein Herstellungsverfahren eines Heizelements, das aus Kohlenstoff-Mikrofasern von 5 - 20 mm Länge in einer Papierpulpe, Kohlenstoffpulver und einem leitfähigen Polymeren, sowie einem Bindemittel besteht.

In der US 4 534 886 wird ein non-woven Gewebe für ein Heizelement offenbart, das leitfähige Kohlenstofffasern von 3,18 - 50,8 mm Länge und elektrisch leitfähige Rußteilchen enthält.

Die EP 2023688 B1 beansprucht ein Flächenheizsystem aus einer thermoplastischen Matrix und Kohlenstofffasern von 0,1 - 30 mm Länge und 1 - 15 µm Dicke.

Mit fast allen bekannten Heizelementen bzw. Heizzusammensetzungen, die auf einer Heizbeschichtung basieren, erreicht man bei relativ geringer Auftragsdicke (Flächenauflage) und gleicher angelegter Spannung keine befriedigenden Heizleistungen. Die wenigen Beispiele von besonders leistungsstarken Heizbeschichtungen des aktuellen Standes der Technik sind praktisch ausschließlich begründet auf elektrisch leitfähigen Nanoteilchen wie beispielsweise CNT (carbon nano tubes). Die gesundheitlichen Gefahren von solchen nanobasierten Materialien, wie die der Kohlenstoffnanoröhren, sind für biologische Organismen bis dato nicht endgültig geklärt, weil hierzu die nötige Langzeiterfahrung fehlt.

WO 95/20005 A1 betrifft eine Polyimid-Zusammensetzung mit verbesserten Eigenschaften. Die Idee dort ist es, 8 - 69 Gew.% wenigstens eines Polyimids, 30 - 80 Gew.% natürliches Graphitpulver und 1 - 12 Gew.% Kohlenstoff- oder Graphitfasern als Füllmittel zu verwenden. Das natürliche Graphitpulver soll dabei reduzierte Abnutzung und Reibung gewährleisten, während die Kohlenstofffasern die Wärmeausdehnung deutlich reduzieren sollen. Beispielhaft kann eine Kohlenstofffaser mit einer Durchschnittslänge von 130 µm und einem Durchmesser von 7 µm eingesetzt werden.

WO 03/103 955 A1 betrifft einen Gleitlagerverbundwerkstoff, bei dem Graphitpartikel in Gewichtsanteilprozenten von 5 - 15 verwendet werden können.

DE 10 2011 007 834 A1 offenbart eine mineralische Zusammensetzung zur Herstellung elektrischer Heizschichten, Dort soll ein anorganisches Bindemittel verwendet werden. Feinkörnige Graphitteilchen sind in einer Menge von 0,5 - 5 Gew.% genannt.

WO 2008/105121 A1 betrifft ein halbleitende Harzzusammensetzung mit zwei leitfähigen Füllstoffen, die in verschiedenen Gussprodukten eingesetzt werden kann.

Database WPI, Week 200914, Thomson Scientific, London, GB, AN 2009-B30953 und KR 2008 0030410 A, 4. April 2008, offenbaren eine leitfähige Tinten-Zusammensetzung für einen flach geformten Heizkörper, welche 2 - 12 Gew.% Ruß, 2 - 12 Gew.% Graphit, 1 - 10 Gew.% Carbonfasern mit einer Länge von 0,1 - 0,5 mm, 20 - 27 % eines Polymerharzes, 1 - 3 Gew.% eines Dispergiermittels, 1 - 60 Gew.% eines organischen Lösungsmittels, 1 - 5 Gew.% Polyethylenwachs, 10 - 20 % langsam trocknendes Lösungsmittel und 3 - 10 Gew.% eines gummiartigen Klebemittels enthält.

DE 2 326 936 A betrifft ein leitfähiges Überzugsmittel in Form einer schichtbildenden, rheologisch vorteilhaften flüssigen Mischung und seine Verwendung für elektrische Widerstandselemente, beispielsweise zur Umwandlung von elektrischer Energie in Wärmeenergie. Es soll ein leitfähiges, schichtbildendes, rheologisch vorteilhaftes, flüssiges Überzugsmittel gefunden werden, bei dessen Verwendung dauerhafte elektrische Widerstandselemente mit gleichbleibenden elektrischen Widerstandswerten bei einer Dauerbelastung hergestellt werden können, weshalb zusätzlich leitfähige Fasermaterialien vorhanden sein sollen, so dass das Überzugsmittel als gehärtete Schicht einen spezifischen Widerstandswert zwischen 10⁻³ und 10⁺¹⁰ Ω * cm besitzen soll.

KR 2000 0053890 A offenbart eine auf elektrischem Widerstand basierende Heizvorrichtung. Eine Mischung aus einem "far infrared light pigment" und mit Graphit wird auf Glasfaser aufgebracht.

Der vorliegenden Erfindung liegt deshalb die Aufgabe zugrunde, ein Heizmittel in Form einer elektrisch leitfähigen Beschichtung bereitzustellen, bei dem durch eine gezielte Auswahl der leitfähigen Komponenten und eine gezielte Kombination von deren Abmessungen eine deutlich höhere Heizleistung erreicht wird, und wodurch die Flächenauflage einer solchen funktionellen Beschichtung herabgesetzt werden kann.

Eine weitere Aufgabe dieser Erfindung besteht darin, das potentielle Risiko von Gesundheitsgefährdungen durch Nanomaterialien bei der Herstellung eines solchen Heizsystems durch den Ausschluss von Nanoteilchen von vornherein zu vermeiden.

Eine weitere Aufgabe dieser Erfindung besteht darin, bei gleicher Flächenauflage und gleichen sonstigen Vorbedingungen eine entsprechend leistungsfähigere Widerstandsheizung zu gewährleisten und damit einen textilen verbesserten Heizkörper in Form eines Heizgewebes, -gewirkes oder -geleges herzustellen.

Diese Aufgaben werden gelöst durch ein Heizmittel gemäß Anspruch 1, einen elektrisch leitenden Heizkörper gemäß Anspruch 7 und eine Verwendung gemäß Anspruch 9. Vorteilhafte Weiterbildungen ergeben sich aus den Unteransprüchen.

Erfindungsgemäß umfasst das Heizmittel in Form einer elektrisch leitfähigen Beschichtung für einen solchen elektrisch leitenden Heizkörper ein Elastomer als einen Basiswerkstoff und darin eingebettet ein homogenes Gemisch aus einer Carbonfaser mit einer mittleren Faserlänge von 70 - 180 µm, gemessen mit lichtmikroskopischer Messung, wobei mittlere Faserlänge bedeutet, dass etwa 50% der Faser diese Länge haben, und einem mittleren Faserdurchmesser von 4 - 15 µm und dispergierten plättchenförmigen Graphitteilchen mit einem mittleren Teilchendurchmesser d₅₀ von 1 - 10 µm, gemessen durch Laserbeugung nach ISO 13320 mit einem Lasergranulometer, wobei das Heizmittel umfasst:
5 - 30 Gew.-% Elastomeres, vorzugsweise 5 - 20 Gew.-%,
8 - 25 Gew.-% Carbonfasern, vorzugsweise 10 - 20 Gew.-%,
50 - 85 Gew.-% Graphitteilchen, vorzugsweise 60 - 85 Gew.-%, jeweils bezogen auf das Gesamtgewicht des getrockneten Heizmittels.

Der Basiswerkstoff ist ein Elastomeres.

Derartige Elastomere können ausgewählt werden aus Polymeren wie Polyacrylaten, Polyurethanen, diversen synthetischen und natürlichen Kautschuken sowie diversen Mischungen von den genannten Polymeren, sofern diese Wärmebeständigkeiten von mindestens 100°C im Sinne der Anwendung zeigen. Die erforderliche Wärmebeständigkeit eines solchen Basiswerkstoffes ergibt sich natürlich für den Fachmann aus der gewünschten Heizleistung, der zu erzielenden Temperatur und auch der Umgebung, in der das erfindungsgemäße Heizmittel eingebracht werden soll.

Der Begriff "darin eingebettet" bedeutet, daß das homogene Gemisch mit dem Basiswerkstoff vermischt wird und die Carbonfasern und Graphitteilchen im Basiswerkstoff verteilt vorliegen.

Das erfindungsgemäße Heizmittel kann auf beliebige Körper des Grundmaterials aufgetragen werden, um einen Heizkörper zu bilden. Dies kann beispielsweise ein textiles Flächenmaterial sein, aufgebaut aus z. B. Polypropylen, Polyethylen, Glasfasern oder Gemischen von diesen Materialien.

Bevorzugt für die vorliegende Erfindung sind als Grundmaterial für einen Heizkörper Glasfasergewebe, -gelege oder auch -gewirke, insbesondere Glasfasergittergewebe mit Maschenöffnungen im Bereich von 1 × 1 bis 20 × 20 mm, insbesondere 3 × 3 bis 10 × 10 mm. Derartige Fasergittergewebe aus Glasfasergarnen oder Glasfaserrovings können vorteilhaft auch auf einem Glasfaservlies angeordnet sein und dadurch gegebenenfalls einen Komposit bilden.

Das Glas, aus dem die textile Faser von solchen Geweben, Gewirken und Gelegen hergestellt wird, ist vorzugsweise ein E-Glas, ECR-Glas, C-Glas oder ähnliches Glas.

Ein besonders bevorzugtes Grundmaterial ist ein Glasfasergewebe, insbesondere ein Glasfasergittergewebe mit Maschenöffnungen von 4 × 4 mm, 6 × 6 mm oder 10 × 10 mm (z. B. von der Vitrulan Technical Textiles GmbH, Oberland am Rennsteig, Deutschland).

Der Anteil des elastomeren Basiswerkstoffes an dem Heizmittel liegt im Bereich von 5 bis 30 Gew.-%, vorzugsweise 5 bis 20 Gew.-%.

Bevorzugte Elastomere sind Styrol-Butadien-Kautschuke (SBR), Isoprenkautschuke, Polyacrylate oder solche Kautschuke, die S-, O-, Cl-Gruppen oder Styrol enthalten. Besonders bevorzugt ist ein Styrol-Butadien-Copolymer oder Styrol-Butadien- Kautschuk, der z. B. als wässrige Dispersion (oder Latex) auf dem Markt erhältlich ist.

Der Anteil der Carbonfasern liegt im erfindungsgemäßen Heizmittel im Bereich von 8 - 25 Gew.-%, vorzugsweise 10 - 20 Gew.-%, insbesondere 10 bis 15 Gew.-%.

Die mittlere Filamentlänge der eingesetzten Carbonfasern liegt vorteilhaft im Bereich von 70 - 160 µm, insbesondere 90 - 130 µm, speziell 90 - 1 10 µm. Die gewünschte mittlere Faserlänge kann, sofern das Produkt nicht kommerziell verfügbar ist, auch durch Mahlen aus einem gröberen Carbonfasermaterial mit größeren Faserlängen erzeugt werden, z. Bsp. mit einer Schwingmühle und geeigneten Mahlkörpern. Dies ist gängiger Stand der Technik und für den Fachmann ohne weiteres zu verwirklichen.

Der mittlere Faserdurchmesser beträgt vorteilhaft 7 - 13 µm, wobei solche Faserstärken auf dem Markt erhältlich sind.

Eine besonders bevorzugte Carbonfaser der hier dargelegten Erfindung hat eine mittlere Faserlänge von 90 - 130 µm und eine mittlere Faserdicke von 13 µm, ganz speziell von 6 - 8 µm, insbesondere 7 µm.

Die Messung der mittleren Faserlängen erfolgt mittels lichtmikroskopischer Messungen. Ähnlich wie beim Durchmesser der Graphitteilchen bedeutet "mittlere" Faserlänge wenigstens, dass etwa 50 % der Faser diese Länge haben.

Der Anteil der in dem erfindungsmäßen Heizmittel eingesetzten Graphitteilchen liegt im Bereich von 50 - 85 Gew.-%, bezogen auf das Gesamtgewicht des ausgehärteten Heizmittels.

Die Graphitteilchen in dem erfindungsgemäßen Heizmittel haben eine kristalline schuppige oder plättchenförmige Struktur und sind nicht feinkörnig-dicht wie Graphitoide. Der Durchmesser d₉₀ der Teilchen liegt bei < 10 µm und der mittlere Durchmesser d₅₀ dieser Plättchen liegt bei 1 bis 10 µm, insbesondere 3 bis 10 µm. Unter "d₅₀" wird verstanden, dass wenigstens etwa 50 % der Teilchen in diesem Durchmesserbereich liegen, unter "d₉₀", dass wenigstens etwa 90 % der Teilchen in diesem Bereich liegen. Die Messung erfolgt durch Laserbeugung nach ISO 13320 mit einem Lasergranulometer, z. B. CILAS 1090LD.

Der Begriff "dispergiert" im Zusammenhang mit den Graphitteilchen bedeutet, dass diese in einer wässrigen Dispersion vorliegen, gegebenenfalls mit üblichen Dispergierhilfsmitteln wie z. Bsp. Carboxymethylcellulose, Isopropanol und/oder Verdickern. Der Anteil solcher Hilfsmittel in der Dispersion liegt unter 3 Gew.-%.

Ebenfalls im Gegensatz zu vielen Heizmitteln des Standes der Technik wird in der erfindungsgemäßen Heizschicht kein Ruß eingesetzt. Prinzipiell wäre Ruß aufgrund seiner hohen inneren Oberfläche gut für ein leitfähiges Netzwerk in einer solchen funktionellen Beschichtung geeignet. Jedoch bewirkt dieses Material - aufgrund seiner amorphen Anteile - in der Heizbeschichtung keine gute Leitfähigkeit und ist daher für die Lösung der oben beschriebenen Aufgabe nicht geeignet. Darüber hinaus enthält Ruß auch Nanoteilchen, im Gegensatz zu den gesundheitlichen Risiken von CNT sind jedoch die schädlichen Auswirkungen von Rußen hinlänglich bekannt.

Wie bereits erwähnt, beziehen sich Konzentrationsangaben des Elastomeren, der Carbonfaser und der Graphitteilchen in allen Fällen auf das Gesamtgewicht des getrockneten Heizmittels. In einer bevorzugten Ausführungsform der Erfindung umfasst das Heizmittel 5 bis 10 Gew.-% Elastomeres, insbesondere SBR, 10 bis 15 Gew.-% Carbonfasern und 80 bis 85 Gew.-% Graphitteilchen.

In einer weiteren bevorzugten Ausführungsform der Erfindung umfaßt das Heizmittel 10 bis 30 Gew.-% Elastomeres, insbesondere SBR, 10 bis 20 Gew.-% Carbonfasern und 60 bis 70 Gew.-% Graphitteilchen.

Die Leistungsfähigkeit des erfindungsgemäßen Heizmittels ergibt sich daraus, dass bei gleichen physikalischen, elektro- und beschichtungstechnischen Randbedingungen (Substrat, Elektrodenabstand, angelegte Spannung, Beschichtungsmenge pro m²) überraschend hohe Heizleistungen von 1500 bis über 5000 W/m² erreicht werden können, wobei selbst Werte von 2000 - 5000 W/m² oder 3000 - 5000 W/m² mit Spannungen von 24, 48 oder 60 V erreicht werden können.

Diese Leistungen liegen bis zu 100 % oder mehr über denen vergleichbarer Produkte des Standes der Technik.

Ohne an eine bestimmte Theorie gebunden zu sein, scheint es für eine möglichst effiziente Kontaktierung der Leitpartikel und damit für die Stromleitung in der Heizbeschichtung ein optimales Zusammenspiel bestimmter Carbonfaserlängen, Carbonfaserdicken und Graphitteilchendurchmesser zu geben, mit dem eine überraschend hohe Leit- und Leistungsfähigkeit des Heizmittels erzielt werden kann.

Das erfindungsgemäße Heizmittel kann mit bekannten Stromspannungen beaufschlagt werden, also solchen im Niederspannungsbereich von beispielsweise 12 V, 24 V,48 V oder 60 V, oder auch im höheren Spannungsbereich von 110 bis 240 V. Sehr gute Ergebnisse mit 240 V können bereits mit Graphitteilchenkonzentrationen von 50 - 70 Gew.-%, 15 - 25 Gew.-% Carbonfaser und 15 - 30 Gew.-% Elastomeren erreicht werden.

Die Erfindung betrifft auch einen elektrisch leitenden Heizkörper, der ein Grundmaterial umfasst und darauf oder darin angeordnet ein Heizmittel in Form einer elektrisch leitfähigen Beschichtung, wobei das Heizmittel ein Elastomer als Basiswerkstoff und ein homogenes Gemisch aus einer Carbonfaser mit einer mittleren Faserlänge von 70 - 180 µm, gemessen mittels lichtmikroskopischer Messung, wobei mittlere Faserlänge bedeutet, dass etwa 50% der Faser diese Länge haben, und einem mittleren Faserdurchmesser von 4 bis 15 µm und dispergierten plättchenförmigen Graphitteilchen mit einem mittleren Teilchendurchmesser d₅₀ von 1 bis 10 µm umfasst, gemessen durch Laserbeugung nach ISO 13320 mit einem Lasergranulometer, wobei das Heizmittel umfasst:
5 - 30 Gew.-% Elastomeres, vorzugsweise 5 - 20 Gew.-%,
8 - 25 Gew.-% Carbonfasern, vorzugsweise 10 - 20 Gew.-%,
50 - 85 Gew.-% Graphitteilchen, vorzugsweise 60 - 85 Gew.-%, jeweils bezogen auf das Gesamtgewicht des getrockneten Heizmittels. Der Heizkörper weist außerdem Stromzuführungsleitungen auf.

Das erfindungsgemäße Heizmittel kann mit bekannten Verfahren auf das Grundwerkstoff des Heizkörpers aufgetragen werden, wie z. B. durch Rollen, Foulardieren, Tauchen, Rakeln, Sprühen, sowie Sieb- oder Walzendruck. Auch für das in dieser Erfindung bevorzugte Grundmaterial - Gewebe, Gelege und Gewirke aus Glasfasern, z. B. Glasfasergittergewebe - sind solche in der Beschichtungstechnik üblichen Verfahren zum Auftragen von Beschichtungen bevorzugt. Der Beschichtungsprozeß kann wiederholt erfolgen, so daß eine 2-fache oder 3-fache Schicht erzeugt und damit eine noch höhere Heizleistung erreicht werden kann.

Der Heizkörper kann eine beliebige Form haben, z. B. plattenförmig oder mit gekrümmten Flächen. Das Grundmaterial des Heizkörpers kann fest oder flexibel sein. Besonders bevorzugt ist ein flexibler Heizkörper, insbesondere eine flexible Bahn aus einem strukturierten Gewebe, wie beispielsweise Gewebe, Gelege und Gewirke aus Glas-, Kunststoff- oder Glas/Kunststofffasergemisch. Speziell o. g. Glasfasergittergewebe sind bevorzugt.

In einer bevorzugten Ausführungsform trägt ein Glasfasergewebe ein flexibles Heizmittel, bei dem der Basiswerkstoff ein Elastomeres ist, z. B. ein Styrol-Butadien- Kautschuk, in dem die Carbonfasern und die Graphitteilchen in homogener Verteilung vorliegen.

Das Grundmaterial selbst kann bereits eine andere Beschichtung tragen, bevor das erfindungsgemäße Heizmittel aufgebracht wird, z. B. um bestimmte strukturelle Eigenschaften des Grundmaterials zu gewährleisten.

Das Grundmaterial kann außer Glasgewebe auch ein polymeres Material sein, wie z. B. Polyethylen, Polypropylen, Polyacrylat, Kautschuke sowie Mischpolymere davon, oder Glasverbundwerkstoffe. Der Basiswerkstoff, also das Elastomere, hat einen Anteil von 5 - 30 Gew.- % an dem Heizmittel. Der Anteil der Carbonfasern liegt im Bereich von 8 - 25 Gew.- %, insbesondere 10 - 20 Gew.-%, und der Anteil der Graphitteilchen liegt im Bereich von 50 - 85 Gew.-%, insbesondere 60 - 85 Gew.-%. Die Konzentrationsangaben sind auf das Gewicht des getrockneten Heizmittels bezogen.

Der erfindungsgemäße Heizkörper kann in üblicher und bekannter Weise durch Stromzuführungselektroden kontaktiert werden. Durch die sehr hohe Heizleistung des erfindungsgemäßen Heizmittels kann entweder die Auftragungsmenge pro Flächeneinheit (Flächenauflage) verringert oder bei höheren Auftragungsmengen der Elektrodenabstand für die Stromzuführung erheblich vergrößert werden. Derartige Parameter werden durch die jeweilige gewünschte Anwendung bzw. entsprechend der gewünschten Leistung eines solchen Heizelementes definiert.

Denkbar ist auch ein Verfahren zur Herstellung eines flächigen Heizkörpers aus einem Glasfasergewebe, dadurch gekennzeichnet, daß eine Dispersion von plättchenförmigen Graphitteilchen mit einem mittleren Durchmesser d₅₀ der Plättchen von 1 bis 10 µm mit Carbonfasern einer Faserlänge von 70 - 180 µm und einem Faserdurchmesser von 4 - 15 µm und mit einer Dispersion eines Elastomeren vermischt und bei 1000 bis 1500 U/min homogenisiert werden, das so erhaltene homogene Gemisch als Heizmittel auf ein Glasfasergewebe aufgetragen wird, danach ausgehärtet wird, und bei einer Auftragsmenge von 60 - 80 g / m² die Abstände der Stromzuführungselektroden im Bereich von 10 - 50 cm liegen, um Heizleistungen von 1500 bis 5000 W/m² bei angelegten Spannungen von 24V, 48V oder 60V zu erreichen.

Die Erfindung soll nachstehend durch Beispiele näher erläutert werden. Alle Prozentangaben sind Gewichtsprozente.

### Beispiel 1

Eine Dispersion von plättchenförmigen Graphitteilchen wird mit einer Menge an Carbonfasern und einer SBR-Dispersion mit einem Flügelrührer vermischt und bei 1200 U/min homogenisiert. Die eingesetzten Mengen werden so gewählt, daß sich nach der späteren Trocknung des Gemisches eine Konzentration von
60 % Graphit (1-10 µm)
10 % Carbonfaser (7 µm Dicke, 100 µm Länge)
30 % SBR (Styrol-Butadien-Kautschuk)
ergibt.

Das erhaltene Heizmittelgemisch wird auf ein textiles Grundmaterial (offenmaschiges Gittergewebe) aus Glasfasern (Länge Kette 20,5 cm; Länge Schuß 14,5 cm) durch Walzen aufgetragen und bei 150 °C getrocknet. Vor der Beschichtung mit dem Heizmittel wird das textile Trägermaterial mit zwei Stromzufuhrelektroden im Abstand von 10,5 cm an den beiden Längsseiten versehen.

Die Flächenauflage beträgt 76,13 g/m².

Mit einer angelegten Spannung von 24 V wird mit dem gebildeten Heizkörper eine Heizleistung von 1671 W/m² erreicht. Das entspricht einer flächen- und auflagenbezogenen Heizleistung P_{Flächenauflage} von 738 W/(g m²).

### Beispiel 2

Es wird wie im Beispiel 1 gearbeitet. Die Konzentrationen in der ausgehärteten Beschichtung betragen
60 % Graphit (1 - 10 µm)
20 % Carbonfaser (7 µm Dicke, 100 µm Länge)
20 % SBR
Flächenauflage: 85,11 g/m²
Heizleistung bei 24 V: 2140 W/m² (PFlächenauflage = 845 W/(g m²).

### Beispiel 3

Es wird wie im Beispiel 1 gearbeitet. Die Konzentrationen betragen
70 % Graphit (1 - 10 µm)
10 % Carbonfaser (7 µm Dicke, 160 µm Länge)
20 % SBR
Flächenauflage 66,44 g/m²
Heizleistung bei 24 V: 1792 W/m² (907 W/(g m²)

### Beispiel 4

Es wird wie im Beispiel 1 gearbeitet. Die Konzentrationen betragen
80 % Graphit (1 - 10 µm)
10 % Carbonfaser (7 µm Dicke, 180 µm Länge)
10 % SBR
Flächenauflage 69,27 g/m²
Heizleistung bei 24 V: 2196 W/m² (1066 W/(g m²)

### Beispiel 5

Es wird wie im Beispiel 1 gearbeitet. Die Konzentrationen betragen
80 % Graphit (1 - 10 µm)
10 % Carbonfaser (7 µm Dicke, 70 µm Länge)
10 % SBR
Flächenauflage 59,88 g/m²
Heizleistung bei 24 V: 1760 W/m² (989 W/(g m²)

### Beispiel 6

Es wird wie im Beispiel 1 gearbeitet. Die Konzentrationen betragen
75 % Graphit (1 - 10 µm)
5 % Carbonfaser (7 µm Dicke, 100 µm Länge)
20 % SBR
Flächenauflage 66,17 g/m²
Heizleistung bei 24 V: 1534 W/m² (780 W/g m²)

### Beispiel 7 Vergleichsbeispiel 1

10 % Carbonfaser (13 µm Dicke, 130 µm Länge)
90 % SBR
Flächenauflage 43,40 g/m²
Heizleistung bei 24 V: 0 W/cm²

### Beispiel 8 Vergleichsbeispiel 2

Polyurethan-Heizdispersion des Standes der Technik mit Carbon-Nanomaterialien und Graphit als leitfähigen Komponenten (Carbo e-Therm PUR-160 1 W)

Flächenauflage 30,05 g/m², Abstand Stromzufuhrelektroden 10,5 cm, Heizleistung bei 24 V: 1558 W/m² (758 W/(g m²)

### Beispiel 9 Vergleichsbeispiel 3

Heizdispersion des Standes der Technik
61 % Graphit (1 - 10 µm)
9 % Carbon-Nanotubes
10 % SBR
Flächenauflage 35,90 g/m², Abstand Stromzufuhrelektroden 10,5 cm
Heizleistung bei 24 V: 525 W/m² (492 W/(g m²)

Der Vergleich der erfindungsgemäßen Beispiele 1 - 6 mit Heizleistungen P_{Flächenauflage} von 845 - 1066 W/(g m²) gegenüber solchen mit 492 und 758 W/(g m²) zeigt die signifikante Überlegenheit des Heizmittels und damit auch der Heizkörper der Erfindung.

## Patentansprüche

1. Heizmittel in Form einer elektrisch leitfähigen Beschichtung für einen elektrisch leitenden Heizkörper, umfassend ein Elastomer als einen Basiswerkstoff und darin eingebettet ein homogenes Gemisch aus einer Carbonfaser mit einer mittleren Faserlänge von 70 - 180 µm, gemessen mit lichtmikroskopischer Messung, wobei mittlere Faserlänge bedeutet, dass etwa 50% der Faser diese Länge haben, und einem mittleren Faserdurchmesser von 4 bis 15 µm und dispergierten plättchenförmigen Graphitteilchen mit einem mittleren Durchmesser d₅₀ von 1 bis 10 µm, gemessen durch Laserbeugung nach ISO 13320 mit einem Lasergranulometer, wobei das Heizmittel umfasst:
5 - 30 Gew.-% Elastomeres, vorzugsweise 5 - 20 Gew.-%,
8 - 25 Gew.-% Carbonfasern, vorzugsweise 10 - 20 Gew.-%,
50 - 85 Gew.-% Graphitteilchen, vorzugsweise 60 - 85 Gew.-%, jeweils bezogen auf das Gesamtgewicht des getrockneten Heizmittels.

2. Heizmittel nach Anspruch 1, worin die mittlere Länge der Carbonfasern im Bereich von 70 bis 160 µm, insbesondere 90 - 130 µm, speziell 90 - 110 µm liegt.

3. Heizmittel nach Anspruch 1, worin die mittlere Dicke der Durchmesser der Carbonfasern im Bereich von 7 - 13 µm liegt.

4. Heizmittel nach einem der Ansprüche 1 bis 3, worin es Carbonfasern mit mittleren Längen von 90 - 130 µm und mittleren Faserdurchmessern von gleich oder kleiner 13 µm, insbesondere 6 bis 8 µm enthält.

5. Heizmittel nach einem der Ansprüche 1 - 4, umfassend
5 - 10 Gew.-% Elastomeres
10 - 15 Gew.-% Carbonfasern
80 - 85 Gew.-% Graphitteilchen,
jeweils bezogen auf das Gesamtgewicht des getrockneten Heizmittels.

6. Heizmittel nach einem der Ansprüche 1 bis 4, umfassend
10 - 30 Gew.-% Elastomeres
10 - 20 Gew.-% Carbonfasern
60 - 70 Gew.-% Graphitteilchen,
jeweils bezogen auf das Gesamtgewicht des getrockneten Heizmittels.

7. Elektrisch leitender Heizkörper, **gekennzeichnet durch** ein Grundmaterial, und darauf oder darin angeordnet ein Heizmittel in Form einer elektrisch leitfähigen Beschichtung, wobei das Heizmittel ein Elastomer als Basiswerkstoff und ein homogenes Gemisch von einer Carbonfaser mit einer mittleren Faserlänge von 70 - 180 µm, gemessen mittels lichtmikroskopischer Messung, wobei mittlere Faserlänge bedeutet, dass etwa 50% der Faser diese Länge haben, und einem mittleren Faserdurchmesser von 4 - 15 µm und dispergierten plättchenförmigen Graphitteilchen mit einem mittleren Teilchendurchmesser d₅₀ von 1 - 10 µm umfasst, gemessen durch Laserbeugung nach ISO 13320 mit einem Lasergranulometer, wobei das Heizmittel umfasst:
5 - 30 Gew.-% Elastomeres, vorzugsweise 5 - 20 Gew.-%,
8 - 25 Gew.-% Carbonfasern, vorzugsweise 10 - 20 Gew.-%,
50 - 85 Gew.-% Graphitteilchen, vorzugsweise 60 - 85 Gew.-%, jeweils bezogen auf das Gesamtgewicht des getrockneten Heizmittels.

8. Heizkörper nach Anspruch 7, wobei das Grundmaterial ein Glasfasergewebe ist.

9. Verwendung eines Heizmittels nach einem der Ansprüche 1 - 6 zur Herstellung eines flächigen Heizkörpers.

## Claims

1. Heating composition in the form of an electrically conductive coating for an electrically conductive heating body, comprising an elastomer as a base substance and embedded therein a homogeneous mixture of a carbon fibre having an average fibre length of 70-180 µm measured by optical microscopy, wherein average fibre length is to be understood as meaning that about 50% of the fibres have this length, and an average fibre diameter or 4 to 15 µm and dispersed floccular graphite particles having an average diameter d₅₀ of 1 to 10 µm measured by laser diffraction according to ISO 13320 with a laser granulometer, wherein the heating composition comprises:
5-30% by weight of elastomer, preferably 5-20% by weight,
8-25% by weight of carbon fibres, preferably 10-20% by weight,
50-85% by weight of graphite particles, preferably 60-85% by weight, in each case based on the total weight of the dried heating composition.

2. Heating composition according to Claim 1, wherein the average length of the carbon fibres is in the range from 70 to 160 µm, in particular 90-130 µm, especially 90-110 µm.

3. Heating composition according to Claim 1, wherein the average thickness of the diameters of the carbon fibres is in the range of 7-13 µm.

4. Heating composition according to any of Claims 1 to 3, wherein said composition contains carbon fibres having average lengths of 90-130 µm and average fibre diameters of not more than 13 µm, in particular 6 to 8 µm.

5. Heating composition according to any of Claims 1-4, comprising
5-10% by weight of elastomer,
10-15% by weight of carbon fibres,
80-85% by weight of graphite particles,
in each case based on the total weight of the dried heating composition.

6. Heating composition according to any of Claims 1 to 4, comprising
10-30% by weight of elastomer,
10-20% by weight of carbon fibres,
60-70% by weight of graphite particles,
in each case based on the total weight of the dried heating composition.

7. Electrically conducting heating body, **characterized by** a main material and arranged thereupon or therein a heating composition in the form of an electrically conductive coating, wherein the heating composition comprises an elastomer as a base substance and a homogeneous mixture of a carbon fibre having an average fibre length of 70-180 µm measured by optical microscopy, wherein average fibre length is to be understood as meaning that about 50% of the fibres have this length, and an average fibre diameter of 4-15 µm and dispersed floccular graphite particles having an average particle diameter d₅₀ of 1-10 µm measured by laser diffraction according to ISO 13320 with a laser granulometer, wherein the heating composition comprises:
5-30% by weight of elastomer, preferably 5-20% by weight,
8-25% by weight of carbon fibres, preferably 10-20% by weight,
50-85% by weight of graphite particles, preferably 60-85% by weight, in each case based on the total weight of the dried heating composition.

8. Heating body according to Claim 7, wherein the main material is a glass fibre fabric.

9. Use of a heating composition according to any of Claims 1-6 for producing a flat heating body.

## Revendications

1. Moyen de chauffage sous forme d'un revêtement conducteur de l'électricité pour un élément chauffant conducteur de l'électricité, comprenant un élastomère comme matériau de base et, incorporé dans ce dernier, un mélange homogène d'une fibre de carbone ayant une longueur moyenne de fibre de 70-180 µm, mesurée par mesure au microscope optique, longueur moyenne de fibre signifiant qu'environ 50 % de la fibre ont cette longueur, et ayant un diamètre moyen de fibre de 4 à 15 µm et de particules de graphite lamellaires dispersées ayant un diamètre moyen d₅₀ de 1 à 10 µm, mesuré par diffraction laser selon ISO 13320 à l'aide d'un granulomètre laser, le moyen de chauffage comprenant :
5-30 % en poids d'un élastomère, de préférence 5-20 % en poids,
8-25 % en poids de fibres de carbone, de préférence 10-20 % en poids,
50-85 % en poids de particules de graphite, de préférence 60-85 % en poids, dans chaque cas par rapport au poids total du moyen de chauffage séché.

2. Moyen de chauffage selon la revendication 1, dans lequel la longueur moyenne des fibres de carbone est dans la plage de 70 à 160 µm, en particulier de 90-130 µm, spécialement de 90-110 µm.

3. Moyen de chauffage selon la revendication 1, dans lequel l'épaisseur moyenne des diamètres des fibres de carbone est dans la plage de 7-13 µm.

4. Moyen de chauffage selon l'une des revendications 1 à 3, qui contient des fibres de carbone ayant une longueur moyenne de 90-130 µm et un diamètre moyen de fibre inférieur ou égal à 13 µm, en particulier de 6 à 8 µm.

5. Moyen de chauffage selon l'une des revendications 1 à 4, comprenant
5-10 % en poids d'un élastomère
10-15 % en poids de fibres de carbone
80-85 % en poids de particules de graphite,
dans chaque cas par rapport au poids total du moyen de chauffage séché.

6. Moyen de chauffage selon l'une des revendications 1 à 4, comprenant
10-30 % en poids d'un élastomère
10-20 % en poids de fibres de carbone
60-70 % en poids de particules de graphite,
dans chaque cas par rapport au poids total du moyen de chauffage séché.

7. Élément chauffant conducteur de l'électricité, **caractérisé par** un matériau de base et, disposé sur ou dans ce dernier, un moyen de chauffage sous forme d'un revêtement conducteur de l'électricité, le moyen de chauffage comprenant un élastomère comme matériau de base et un mélange homogène d'une fibre de carbone ayant une longueur moyenne de fibre de 70-180 µm, mesurée par mesure au microscope optique, longueur moyenne de fibre signifiant qu'environ 50 % de la fibre ont cette longueur, et ayant un diamètre moyen de fibre de 4-15 µm, et de particules de graphite lamellaires dispersées ayant un diamètre moyen de particule d₅₀ de 1-10 µm, mesuré par diffraction laser selon ISO 13320 à l'aide d'un granulomètre laser, le moyen de chauffage comprenant :
5-30 % en poids d'un élastomère, de préférence 5-20 % en poids,
8-25 % en poids de fibres de carbone, de préférence 10-20 % en poids,
50-85 % en poids de particules de graphite, de préférence 60-85 % en poids, dans chaque cas par rapport au poids total du moyen de chauffage séché.

8. Élément chauffant selon la revendication 7, le matériau de base étant un tissu de fibres de verre.

9. Utilisation d'un moyen de chauffage selon l'une des revendications 1 à 6 pour fabriquer un élément chauffant plat.
